# EUROPÄISCHE PATENTSCHRIFT

(11) **EP 2 017 200 B1**
(45) Veröffentlichungstag und Bekanntmachung des Hinweises auf die Patenterteilung: **10.04.2013**
(21) Anmeldenummer: 08011801.1
(22) Anmeldetag: 30.06.2008
(51) Int. Cl.: B65G 1/02

(54) **Regallager**
Storage racks
Rayonnage

(30) Priorität: 19.07.2007 DE 202007010086 U
(43) Veröffentlichungstag der Anmeldung: 21.01.2009
(73) Patentinhaber: Fricker, Achim, 52062 Aachen (DE)
(72) Erfinder: Fricker, Achim, 52062 Aachen (DE)
(74) Vertreter: Grünecker, Kinkeldey, Stockmair & Schwanhäusser

(56) Entgegenhaltungen:
- EP-A1- 1 780 149
- DE-B- 1 269 041
- GB-A- 2 191 368
- JP-A- 62 201 701
- US-B1- 6 873 881

## Beschreibung

Die vorliegende Erfindung betrifft ein Regallager mit mehreren übereinander vorgesehenen Regalböden zur Lagerung von Waren, die mit einem Transponder versehen sind, und einer Leseeinrichtung zum Auslesen der auf den Transpondern der auf den Regalböden abgelegten Waren gespeicherten Information.

Die vorliegende Erfindung liegt auf dem Gebiet der modernen Warenwirtschaft. Es ist bekannt, Waren mit Transpondern zu versehen, die Produktinformation enthalten. Die auf den Transpondern enthaltene Information kann beim Einbringen der Ware in ein Regallager oder eine Verkaufsfläche ausgelesen werden. Hierdurch ist es möglich, den Ein- und Ausgang des Lagers elektronisch zu überwachen, um jederzeit aktuelle Informationen zum Lagerbestand verfügbar zu haben. Mitunter ist aber die Überwachung des Wareneingangs am Eingang der Ware zum Lager problematisch, insbesondere wenn verschiedene Waren mit verschiedenen Produktinformationen den Eingang passieren. Darüber hinaus kann es auch aufgrund von nicht erfassten Warenabgängen zu Veränderungen des Lagerbestandes kommen. Dementsprechend besteht Bedarf an einer elektronischen Inventur des Lagerbestandes.

Derzeit wird in der Fachwelt die Möglichkeit diskutiert, Leseeinrichtungen an dem Regallager anzuordnen. Zu jedem Regalboden soll eine Leseeinrichtung vorgesehen werden, um die auf dem entsprechenden Regalboden abgelegten Waren zu identifizieren, und zwar durch Auslesen der Informationen, die in dem der Ware zugeordneten Transponder gespeichert sind. Eine solche Ausgestaltung ist relativ aufwändig und bedingt einen erheblichen Verkabelungsaufwand, um die einzelnen Leseeinrichtungen des Regals miteinander zu verbinden und signalmäßig an einen Computer anzuschließen, der die Signale verarbeitet, um eine elektronische Inventarliste zu erstellen.

So offenbart die EP 1 780 149 A1 ein Regallager mit einem Bedienelement, welches an dem Regallager in horizontaler Richtung beweglich ist. Das Bedienelement weist einen sich in vertikaler Richtung erstreckenden Mast auf, an welchem ein Hubschlitten mit einer Ein- und Auslagerungsvorrichtung vorgesehen ist. Am Hubschlitten ist ein Lesegerät angeordnet, mit dem Informationen von Transpondern, welche an den gelagerten Artikeln angebracht sind, ausgelesen werden können. Die aus den Transpondern ausgelesenen Informationen werden einem Lagerverwaltungsrechner zur Auswertung zugeleitet. Das Lesegerät bewegt sich hierbei entlang des Verfahrweges orthogonal zu den Lagerplätzen des Regallagers.

Der vorliegenden Erfindung liegt das Problem zugrunde, ein Regallager anzugeben, welches sich auf einfache Weise für die elektronische Inventur eignet.

Zur Lösung dieser Aufgabe wird gemäß der vorliegenden Erfindung ein Regallager mit den Merkmalen von Anspruch 1 angegeben. Dieses Regallager unterscheidet sich von dem Stand der Technik dadurch, dass die Leseeinrichtung an einer Bewegungseinrichtung angeordnet ist, die Bewegungseinrichtung wenigstens zwei sich kreuzende Seilzüge umfasst, die an ihrem Knotenpunkt die Leseeinrichtung tragen und auf angetriebenen Trommeln gewickelt sind. Eine solche Bewegungseinrichtung ist beispielsweise aus der Sportberichterstattung bekannt, und zwar zur Führung einer Kamera, die sich über dem Spielfeld erstreckt und beispielsweise bei der Fußballweitmeisterschaft 2006 zum Einsatz gekommen ist. Eine solche Bewegungseinrichtung bietet die Möglichkeit, die Leseeinrichtung auch oberhalb eines Regallagers zu führen und im Bedarfsfall die Leseeinrichtung zwischen benachbarten Reihen des Regallagers abzusenken, ohne dass nach dem Auslesen der Informationen die Leseeinrichtung bzw. die Bewegungseinrichtung den Aufbau des Regallagers stört. Die erfindungsgemäße Bewegungseinrichtung ist derart vorbereitet, dass durch kontrolliertes Steuern derselben die Leseeinrichtung entlang einer vorbestimmten Bahn relativ zu dem Regallager bewegt wird, um so die einzelnen Böden und deren Inhalt abzuscannen und hierbei die Transponderinformation auszulesen. Als vorbestimmbare Bewegungsbahn wird dabei insbesondere eine solche Bewegungsbahn angesehen, die von einem Computerprogramm vorherbestimmt ist. Die hierbei durch die Leseeinrichtung ausgelesene Information kann über Datenleitungen, die von der Bewegungseinrichtung mitgeführt und an einen zentralen Rechner angeschlossen sind, weitergeleitet werden. Auch ist es möglich, die ausgelesenen Informationen per Funk zu übertragen.

Die Bewegung der Bewegungseinrichtung aufgrund von Bewegungsinformation, die in einem Computer gespeichert ist, bietet darüber hinaus die Möglichkeit, den erfassten Lagerbestand räumlich aufzuschlüsseln. Nach dem Einlesen des Lagerbestandes kann somit nicht nur eine Inventurliste erstellt werden, sondern auch eine Topografie-Liste, die angibt, welche Waren an welchem Ort befindlich sind, so dass ein direktes Auffinden von Waren, gegebenenfalls ein Detektieren falsch abgelegter Waren, anhand der gewonnenen Informationen möglich ist.

Alternativ zu der zuvor beschriebenen Abspeicherung von Lageinformationen zu den gescannten Ablagen des Lagers können einzelne Lagerböden auch Transponder aufweisen, die fest an den Lagerböden befestigt sind und welche Lageinformation bzw. die entsprechenden Böden jeweils eindeutig identifizierende Information enthalten und welche beim Abscannen des Regallagers von der Leseeinrichtung ausgelesen werden, in der Regel zusammen mit denjenigen Informationen der Transponder von Waren, die auf dem entsprechenden Regalboden abgelegt sind.

Darüber hinaus besteht die Möglichkeit, die Bewegungseinrichtung zwischen benachbarten Regalreihen anzuordnen, um mit einer einzigen Bewegungseinrichtung die Information von zwei Regalreihen auszulesen. Hierfür kann die Leseeinrichtung beweglich an der Bewegungseinrichtung vorgesehen sein, und zwar derart, dass die Leseeinrichtung beim Auslesen der Information aus einer Regalreihe gegenüber der anderen Regalreihe abgeschirmt ist, so dass lediglich Information aus den Transpondern derjenigen Ware ausgelesen wird, die sich auf der einen Regalreihe befindet.

Des Weiteren sind Kombinationen von Schienensystemen und Seilsystemen möglich, um beispielsweise die Bewegungseinrichtung über Schienen quer zu den Reihen der Regale zu verschieben und die Leseeinrichtung an einem Seil zu halten, welches die Leseeinrichtung entlang der einzelnen Reihen und in verschiedenen Höhen zwischen den einzelnen Reihen führen kann und hierbei computergesteuert von den Trommeln auf- bzw. abgewickelt wird.

## Patentansprüche

1. Regallager mit mehreren übereinander vorgesehenen Regalböden zur Lagerung von Waren, die mit einem Transponder versehen sind, und einer Leseeinrichtung zum Auslesen der auf den Transpondern, der auf den Regalböden abgelegten Waren gespeicherten Information, bei dem die Leseeinrichtung an einer Bewegungseinrichtung angeordnet ist, durch die die Leseeinrichtung in einer vorbestimmbaren Bewegungsbahn entlang der Regalböden bewegbar ist,
**dadurch gekennzeichnet,**
**dass** die Beweounoseinrichtuno wenigstens zwei sich kreuzende Seilzüge umfasst, die an ihrem Knotenpunkt die Leseeinrichtung tragen und auf angetriebenen Trommeln aufgewickelt sind.

2. Regallager nach Anspruch 1, **dadurch gekennzeichnet, dass** mindestens ein Seilzug über Umlenkrollen geführt ist, die an Schienen beweglich geführt sind, die sich quer zu den Reihen der Regale des Regallagers erstrecken.

## Claims

1. Storage rack with a plurality of shelf bases above each other for the storage of goods which are fitted with a transponder, and a reading device for reading the information stored on the transponders of the goods placed on the shelf bases, wherein the reading device is arranged at a movement device by means of which the reading device is movable in a predefinable movement path along the shelf bases, **characterised in that** the movement device comprises at least two mutually crossing traction wires which carry the reading device at their junction and are wound around driven drums.

2. Storage rack according to claim 1, **characterised in that** at least one traction wire is guided over deflector rollers which are guided movably on rails extending transverse to the rows of shelves of the storage rack.

## Revendications

1. Rayonnage avec plusieurs tablettes superposées, pour l'entreposage de produits pourvus d'un transpondeur, et avec un dispositif de lecteur pour lire les informations stockées sur les transpondeurs des produits déposés sur les tablettes, pour lequel le dispositif de lecteur est disposé sur un dispositif de déplacement grâce auquel ledit dispositif de lecteur est apte à être déplacé sur une trajectoire apte à être prédéfinie, le long des tablettes du rayonnage,
**caractérisé en ce que** le dispositif de déplacement comprend au moins deux câbles de traction qui se croisent, qui portent le dispositif de lecteur, au niveau de leur point de jonction, et qui sont enroulés sur des tambours entraînés.

2. Rayonnage selon la revendication 1, **caractérisé en ce qu'**au moins un câble de traction passe sur des poulies de renvoi qui sont guidées mobiles sur des rails, lesquels s'étendent transversalement par rapport aux rangées des rayons du rayonnage.
